# EUROPEAN PATENT APPLICATION

(11) **EP 0 959 171 A1**
(43) Date of publication of application: **24.11.1999**
(21) Application number: 98308736.2
(22) Date of filing: 26.10.1998
(51) Int. Cl.: D06F 39/02

(54) **Washing machine**

(30) Priority: 18.05.1998 KR 9817783
(71) Applicant: SAMSUNG ELECTRONICS CO., LTD., Suwon-City, Kyungki-do (KR)
(72) Inventor: Kim, Sam-joong, Paldal-gu, Suwon-city, Kyungki-do (KR)
(74) Representative: Geary, Stuart Lloyd

(57) **Abstract**

A washing machine is disclosed and includes a detergent container (110) and a conduit (27) for supplying water to the detergent container (110). The washing machine is provided with means (122) for increasing the pressure of water emerging from the conduit (27).

## Description

The present invention relates to a washing machine including a detergent container and a conduit for supplying water to the detergent container.

In a conventional washing machine, detergent in powdered form is dissolved in water supplied from a water supply pipe before being fed into the washing drum, to prevent the powder from coming into direct contact with the laundry which can stain it.

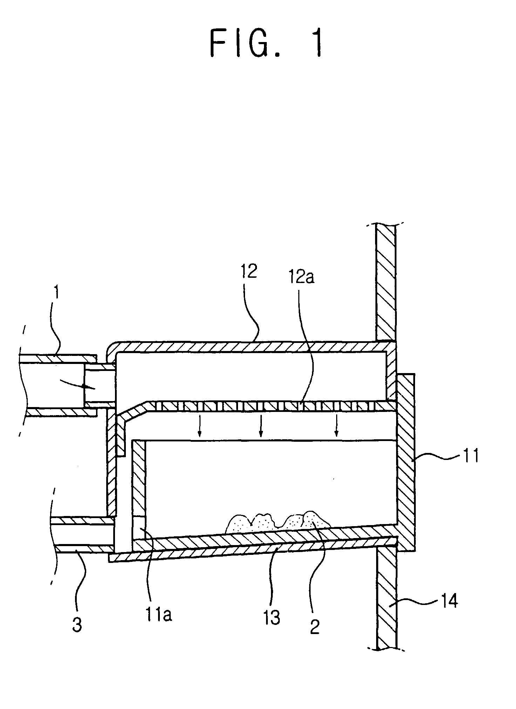

A conventional detergent supply device is illustrated in Figure 1 and includes a detergent container 11, a water supply duct 12 positioned above the detergent container 11 for guiding water from a water supply pipe 1 toward the detergent container 11, and a guide 13 for directing the water in which detergent has been dissolved into a washing drum (not shown).

The detergent container 11 is a drawer mounted within a housing 14 and has a discharge port 11a in its rear wall. The base of the detergent container 11 slopes downwardly toward the discharge port 11a.

The water supply duct 12 has a plurality of holes 12a through which water is guided towards detergent placed in the container 11.

The guide 13 extends from the housing 14 to a water supply hose 3 and performs the dual function of supporting the detergent container 11 and guiding the water in which detergent has been dissolved toward the water supply hose 3 through the discharge port 11a.

A problem with a detergent supply device of a conventional washing machine, is that it takes a substantial length of time for the detergent to completely dissolve in the water supplied from the water supply port 12 through the water supply holes 12a.

Moreover, as the pressure of the water entering the detergent container 11 is low, a uniform amount of water does not pass through all the water supply holes 12a and detergent 2 disposed towards the front of the drawer in a region furthest from the discharge port 11a is not sufficiently dissolved. The undissolved detergent remains in the detergent container 11 resulting in a reduction in the efficiency of the washing machine. Furthermore, the undissolved detergent remaining in the detergent container 11 must be periodically removed which can be inconvenient to the user.

A washing machine according to the present invention is characterised in that the conduit includes means for increasing the pressure of water emerging therefrom.

Preferably, the means for increasing the pressure of the water comprises a constriction in the conduit.

In a preferred embodiment, the conduit includes a guide pipe that extends to a position in the detergent container remote from the detergent/water mix exit port.

The guide pipe preferably extends from the constriction.

The conduit can advantageously include a plurality of guide pipes that extend to a position in the detergent container remote from a detergent/water mix exit port.

An end portion of the or each guide pipe is preferably angled to direct water downwardly into a detergent receiving part of the container.

An embodiment of the present invention will now be described, by way of example only, with reference to Figures 2 to 4 of the accompanying drawings, in which:
Figure 1 is a side sectional view of a prior art detergent supply device of a washing machine;
Figure 2 is a sectional view of a washing machine fitted with a detergent supply device according to the present invention;
Figure 3 is a side sectional view of the detergent supply device of a washing machine according to the present invention; and
Figure 4 is a front view of Figure 3.

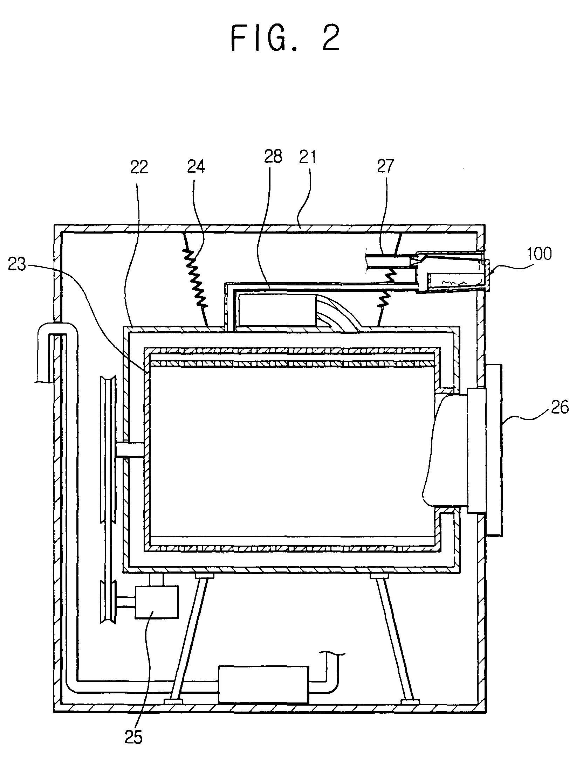

As shown in Figure 2, the detergent supply device 100 according to the invention is mounted above a washing tub 22 which is suspended on springs 24 within a housing. The tub 22 contains a rotatably mounted drum 23, drivable by a motor 25. A door 26 is provided at one end of the drum to enable access to the interior thereof to be obtained.

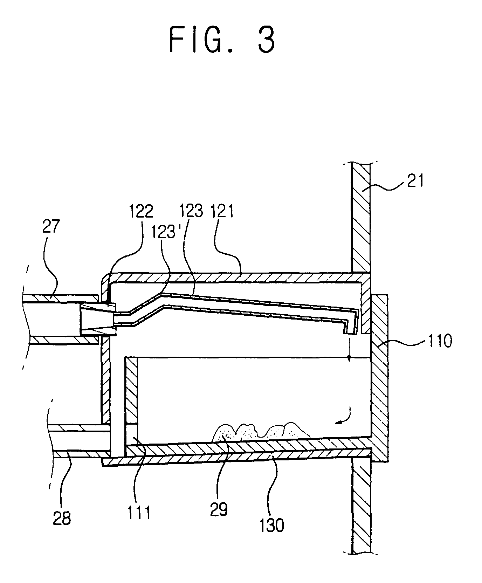

As can be more clearly seen from Figure 3, the detergent supply device 100 includes a detergent container 110, a guide 130 and means for increasing the pressure of the water supplied from a water supply pipe 27 and for guiding it toward the front of the detergent container 110.

The detergent container 110 is in the form of a drawer having an open upper side. A discharge port 111 is formed in the lower part of the rear face of the detergent container 110 through which water in which the detergent 29 is dissolved passes into the washing tub 22. The base of the detergent container 110 slopes downwardly toward the discharge port 111 to assist the flow of water from the container 110 through the discharge port 111.

The guide 130 extends from the housing 21 to a water supply hose 28 and performs the dual function of supporting the detergent container 110 and guiding the water in which detergent has been discharged through the discharge port 111 and toward the water supply hose 28.

A cover 121 is mounted above the detergent container 110. The means for increasing the water pressure comprises a nozzle 122 mounted in the end of the water supply pipe 27. A guide pipe 123 extends from the nozzle 122.

The nozzle 122 is located in an opening in the cover 121 and connects the water supply pipe 27 to the guide pipe 123. The inner diameter of the nozzle 122 narrows gradually along its length from a maximum diameter at its end connected to the supply pipe 27 to a minimum diameter at its other end connected to the guide pipe 123. This has the affect of increasing the water pressure as it passes from the supply pipe 27 to the guide pipe 123.

The guide pipe 123 extends to the front of the detergent container 110 and has an initial portion about ¹/₃ of its length which is tilted upwardly away from the base of the detergent container 110, the remaining part of the guide pipe 123 is tilted downwardly towards the base of the container 123.

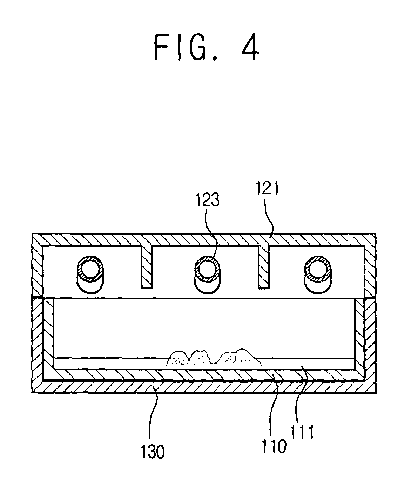

In the present embodiment, three guide pipes 123 are disposed in parallel with each other, as can be seen most clearly from Figure 4. However, it will be appreciated that any number of guide pipes 123 can be provided in dependence on the size of the detergent container 110 and similar considerations.

The operation of the detergent supply device will now be described. The detergent container 110 is opened by pulling it forward. Detergent 29 is then placed within it. When the wash cycle begins, water is supplied to the laundry through the detergent container so that the detergent is dissolved in the water.

The water supplied through the water supply pipe 27 passes through the nozzle 122. The water sprays downwardly into the container from the guide pipe 123 onto the detergent 126 to dissolve it before the water and dissolved detergent is discharged through the discharge port 111, and is supplied into the washing tube 22 through the water supply hose 28.

Although the pressure of the water supplied through the water supply pipe 27 may be low, the pressure and velocity is increased when the water passes through the nozzle 122.

When the required amount of water is supplied into the washing tub 22, a valve is closed (not shown) which prevents supply of water into the washing machine through the water supply pipe 27. The drum 23 can then be rotated by the driving motor 25 to perform the wash cycle.

As described above, as the water supplied from the water supply pipe 27 it increases in pressure before it enters the detergent container 110, the detergent contained in the detergent container 110 is dissolved in a short period of time.

## Claims

1. A washing machine including a detergent container (110) and a conduit (27) for supplying water to the detergent container (110), **characterised in that** the conduit is provided with means (122) for increasing the pressure of water emerging therefrom (27).

2. A washing machine according to claim 1, wherein the means (122) for increasing the pressure of the water comprises a constriction in the conduit (27).

3. A washing machine according to claim 1 or claim 2, wherein the conduit (27) includes a guide pipe (123) that extends to a position in the detergent container (110) remote from a detergent/water mix exit port.

4. A washing machine according to claim 3, wherein the guide pipe (123) extends from the constriction.

5. A washing machine according to claim 1, wherein the conduit (27) includes a plurality of guide pipes (123) that extend to a position in the detergent container (110) remote from a detergent/water mix exit port.

6. A washing machine according to claim 5, wherein the means (122) for increasing the pressure of the water comprises a constriction in the conduit (27), and wherein each guide pipe (123) extends from the constriction.

7. A washing machine according to any of claims 3 to 6, wherein an end portion of the or each guide pipe (123) is angled to direct water downwardly into a detergent receiving part of the container (110).

8. A detergent supply device comprising a detergent container for containing powdered detergent, said detergent container being installed in a housing so as to be removable therefrom, said detergent container having a discharge port for discharging dissolved detergent, said discharge port being formed on a side thereof, a means for increasing a hydraulic pressure of water supplied from a water supply pipe so that water flowing into said detergent container is guided toward a rear area of said detergent container, and a guide for guiding the dissolved detergent discharged through said discharge port of said detergent container into a washing tub.

9. The detergent supply device as claimed in claim 8 characterised in that said increasing means comprises a high pressure pipe being connected to an end of said water supply pipe, said high pressure water pipe forming a nozzle joined to said water supply pipe, and a plurality of guide pipes being connected to said high pressure water pipe in parallel with each other, said guide pipes being extended to the rear area of said detergent container, said guide pipes for guiding water flowing from said high pressure water pipe toward the rear area of said detergent container.

10. The detergent supply device as claimed in claim 9 characterised in that an initial one third section of said guide pipe is tilted upward, and latter two thirds section of said guide pipe is tilted downward.

11. The detergent supply device as claimed in claim 9 characterised in that at least three guide pipes are disposed along a width direction of said detergent container.

12. The detergent supply device as claimed in claim 8 further comprising a cover for covering an upper side of said guide pipes.
